# EUROPEAN PATENT APPLICATION

(11) **EP 2 476 790 A1**
(43) Date of publication of application: **18.07.2012**
(21) Application number: 12150690.1
(22) Date of filing: 11.01.2012
(51) Int. Cl.: D06F 17/10

(54) **Washing Machine and Pulsator Thereof**

(30) Priority: 16.01.2011 KR 20110004324
(71) Applicant: Samsung Electronics Co., Ltd, Suwon-si, Gyeonggi-do 443-742 (KR)
(72) Inventor: Park, Jae Ryong, Gyeonggi-do (KR); Lee, Ji Yu, Incheon (KR); Pyo, Sang Yeon, Gyeonggi-do (KR); Kim, Hyun Sook, Gyeonggi-do (KR); Kim, Sung Hoon, Gyeonggi-do (KR); Cho, Chang Ho, Gyeonggi-do (KR); Kim, Seung Oh, Gyeonggi-do (KR); Jung, Hyun Dong, Seoul (KR); Seo, Dong Pil, Gyeonggi-do (KR); Yu, So Jung, Gyeonggi-do (KR)
(74) Representative: Grünecker, Kinkeldey, Stockmair & Schwanhäusser

(57) **Abstract**

A washing machine (1) washes laundry in a wobbling fashion to improve washing force and to prevent damage to the laundry, the washing machine (1) includes a pulsator (50) rotatably mounted at the lower part of a rotary tub (12) to generate a water current and to move laundry, a plurality of lifters (70,71,72) protruding from the top of the pulsator (50) to raise the laundry during rotation of the pulsator (50), and a movement changing member (80,81,82) formed at the upper end of each of the lifters (70,71,72) to drop the laundry raised by a corresponding one of the lifters (70,71,72), the movement changing member (80,81,82) includes a roller (90) rotated by friction with the laundry.

## Description

### BACKGROUND

### 1. Field

Embodiments relate to a washing machine having a pulsator to move laundry upward and downward so that the laundry is washed in a wobbling fashion.

### 2. Description of the Related Art

Generally, a washing machine is an apparatus that agitates laundry, wash water and detergent in a drum using drive force from a motor so that the laundry is washed through friction therebetween.

The washing machine includes a tub to contain water and a rotary tub rotatably mounted in the tub. Also, a pulsator, which rotates to generate a water current, is mounted at the lower part of the rotary tub.

The pulsator rotates in alternating directions to generate a water current. Wash water and laundry are moved while being stirred by the water current generated by the pulsator with the result that the laundry is washed.

In recent years, research has been conducted into the structure of a pulsator which wobbles laundry upward and downward to improve washing force based on complicated motion of the laundry and to prevent the laundry from being twisted and damaged due to simple motion of the laundry.

### SUMMARY

Therefore, it is an aspect to provide a washing machine having a pulsator to move laundry upward and downward.

It is another aspect to provide a washing machine having a pulsator at which a movement changing member to easily drop laundry raised by a lifter is formed.

Additional aspects will be set forth in part in the description which follows and, in part, will be obvious from the description, or may be learned by practice of the invention.

In accordance with an aspect, a washing machine may include a rotary tub to contain laundry, a pulsator rotatably mounted at the lower part of the rotary tub to generate a water current and to move the laundry, a plurality of lifters protruding from the top of the pulsator to raise the laundry during rotation of the pulsator, and a movement changing member formed at the upper end of each of the lifters to drop the laundry raised by a corresponding one of the lifters.

The movement changing member may include a roller rotated by friction with the laundry.

The roller may be formed in the shape of a cylinder having a hollow part.

The roller may rotate about the radial axis of the pulsator.

The movement changing member may further include a shaft disposed in the hollow part of the roller to support the roller.

The movement changing member may further include a bearing coupled to the roller to smooth rotation of the roller.

The washing machine may further include a movement changing member receiving space formed at the upper end of each of the lifters to receive the movement changing member.

The movement changing member may further include a cover to cover a gap defined between the movement changing member receiving space and the roller to prevent the laundry from being caught in the gap defined between the movement changing member receiving space and the roller.

The cover may be integrally formed at the pulsator.

Each of the lifters may be gently curved from the movement changing member.

The movement changing member may be inclined from the center of the pulsator in the radial direction to prevent the laundry from being driven outside due to centrifugal force.

The lifters may include a first lifter and a second lifter, and the first lifter and the second lifter may be symmetrical with respect to the center of the pulsator.

The lifters may include a first lifter, a second lifter and a third lifter, and the first lifter, the second lifter and the third lifter may be disposed at an angular interval of 120 degrees.

The roller may be provided at the outer circumference thereof with an accelerating member.

The accelerating member may include a plurality of protrusions formed at the outer circumference of the roller.

The accelerating member may include sawteeth formed at the outer circumference of the roller.

In accordance with another aspect, a washing machine may include a rotary tub to contain laundry, a pulsator, having a top curved so that valley parts and ridge parts are alternately formed in the circumferential direction, rotatably mounted at the lower part of the rotary tub to generate a water current and to move the laundry and a movement changing member formed at the upper end of each of the ridge parts to drop the laundry raised along inclined planes between the valley parts and the ridge parts.

The movement changing member may include a roller rotated by friction with the laundry.

The washing machine may further include a movement changing member receiving space formed at the upper end of each of the ridge parts to receive the movement changing member.

In accordance with another aspect, a washing machine may include a tub to contain wash water, a rotary tub rotatably mounted in the tub, and a pulsator rotatably mounted at the lower part of the rotary tub, the pulsator having a lifter protruding from the top thereof to raise and lower the laundry during rotation of the pulsator so that the laundry is washed in a wobbling fashion and a roller mounted at the upper end of the lifter.

In accordance with a further aspect, a pulsator for washing machines rotatably mounted at a rotary tub to generate a water current may include a lifter protruding from the top of the pulsator to raise laundry during rotation of the pulsator and a movement changing member mounted at the upper end of the lifter to drop the laundry raised by the lifter.

The movement changing member may include a roller rotated by friction with the laundry.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a sectional view of a washing machine according to an embodiment;
FIG. 2 is a perspective view of a pulsator according to an embodiment;
FIG. 3 is a plan view of the pulsator of FIG. 2;
FIG. 4 is a bottom view of the pulsator of FIG. 2;
FIG. 5 is a sectional view taken along line A-A of the pulsator of FIG. 2;
FIG. 6 is a sectional view taken along line B-B of the pulsator of FIG. 2;
FIG. 7 is an exploded view of the pulsator illustrating the construction of movement changing members according to an embodiment;
FIG. 8 is a plan view of a pulsator according to another embodiment;
FIG. 9 is a view illustrating a roller according to another embodiment; and
FIG. 10 is a view illustrating a roller according to a further embodiment.

### DETAILED DESCRIPTION

Reference will now be made in detail to the embodiments, examples of which are illustrated in the accompanying drawings, wherein like reference numerals refer to like elements throughout.

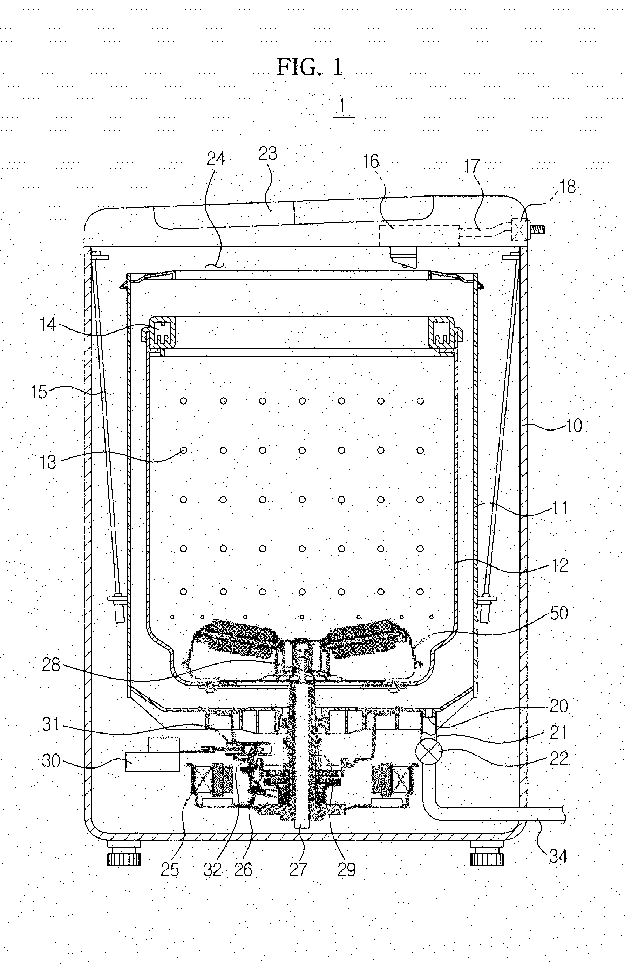

FIG. 1 is a sectional view of a washing machine according to an embodiment.

As shown in FIG. 1, a washing machine 1 may include a cabinet 10 forming the external appearance thereof, a tub 11 disposed in the cabinet 10 to contain wash water, a rotary tub 12 rotatably disposed in the tub 11, and a pulsator 50 disposed in the rotary tub 12 to generate a water current.

An introduction port 24, through which laundry is introduced into the rotary tub 12, may be formed at the top of the cabinet 10. The introduction port 24 may be opened and closed by a door 23 mounted at the top of the cabinet 10.

The tub 11 may be supported at the cabinet 10 by a suspension 15 connecting the lower side of the outside of the tub 11 to the inside upper part of the cabinet 10.

Above the tub 11 may be mounted a water supply pipe 17 to supply wash water to the tub 11. One side of the water supply pipe 17 may be connected to an external water supply source, and the other side of the water supply pipe 17 may be connected to a detergent supply device 16. Water, supplied through the water supply pipe 17, may be introduced into the tub 11, together with detergent, via the detergent supply device 16. In the water supply pipe 17 may be mounted a water supply valve 18 to control the supply of water.

The rotary tub 12 may be formed in the shape of a cylinder open at the top thereof. A plurality of spin-drying holes 13 may be formed at the side of the rotary tub 12. At the upper part of the rotary tub 12 may be mounted a balancer 14 to secure stable rotation of the rotary tub 12 during high-speed rotation of the rotary tub 12.

Below the tub 11 may be mounted a motor 25 to generate drive force to rotate the rotary tub 12 and the pulsator 50 and a power transmission device 26 to simultaneously or selectively transmit the drive force generated by the motor 25 to the rotary tub 12 and the pulsator 50.

A hollow spin-drying shaft 29 may be coupled to the rotary tub 12. A washing shaft 27, which may be mounted in a hollow part of the spin-drying shaft 29, may be coupled to the pulsator 50 via a washing shaft coupling part 28.

The motor 25 may be a direct drive motor having a variable speed function. The motor 25 may simultaneously or selectively transmit drive force to the rotary tub 12 and the pulsator 50 according to vertical movement of the power transmission device 26.

The power transmission device 26 may include an actuator 30 to generate drive force to transmit power, a rod 31 to linearly move according to operation of the actuator 30, and a clutch 32 connected to the rod 31 to be rotated according to operation of the rod 31. The actuator 30 may be an electric motor. Alternatively, the actuator 30 may be a hydraulic cylinder, a linear motor or a solenoid.

At the bottom of the tub 12 may be formed a drainage port 20 through which wash water is drained from the tub 12. A first drainage pipe 21 may be connected to the drainage port 20. In the first drainage pipe 21 may be mounted a drainage valve 22 to control drainage.

The outlet of the drainage valve 22 may be connected to a second drainage pipe 34 through which wash water may be discharged to the outside. The drainage valve 22 may be a solenoid or a link device connected to an electric motor.

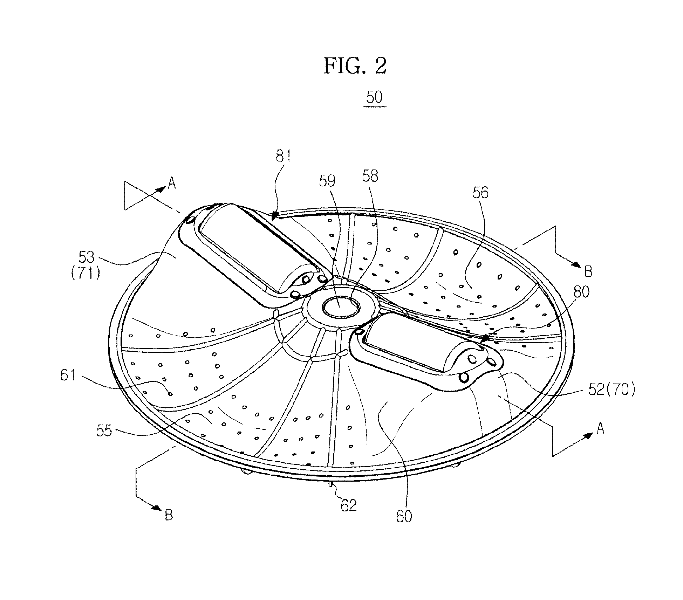

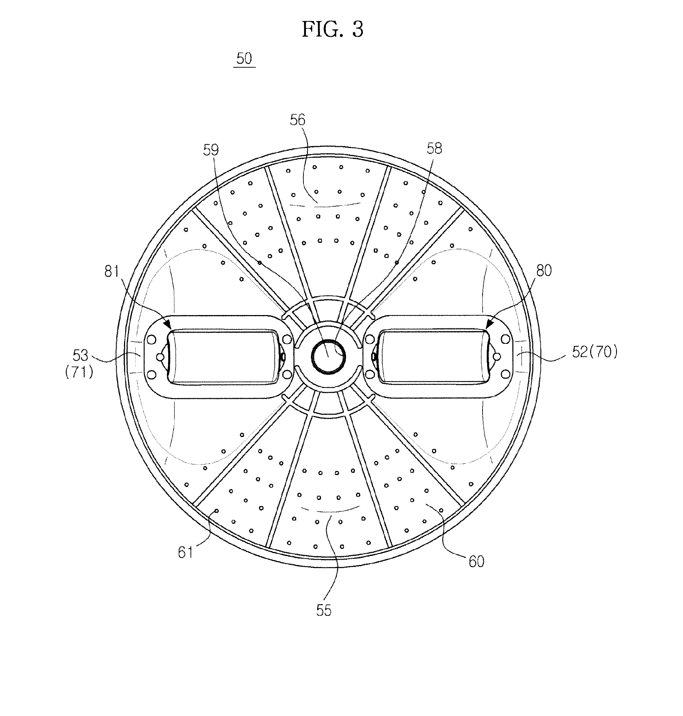

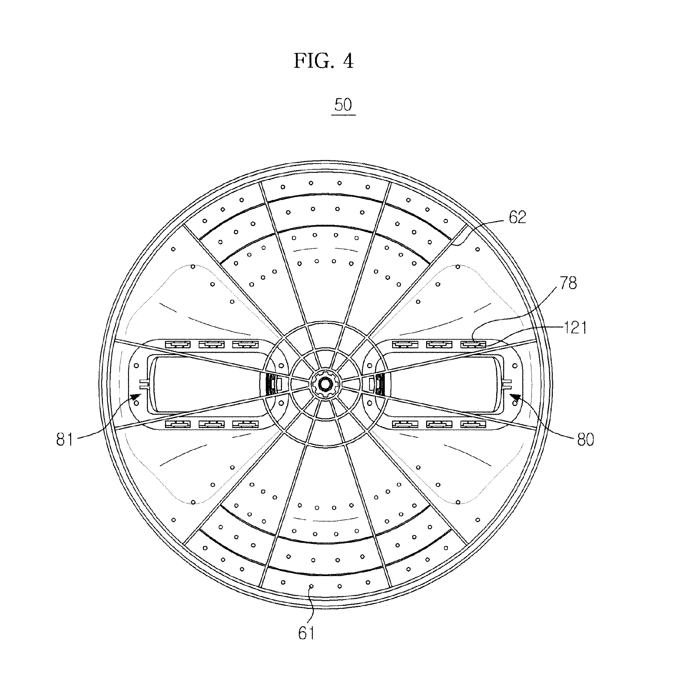

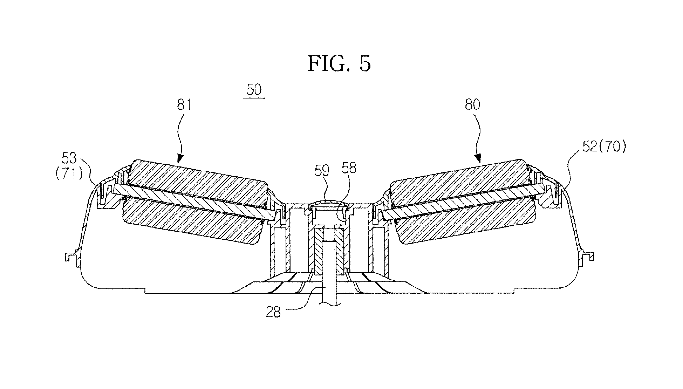

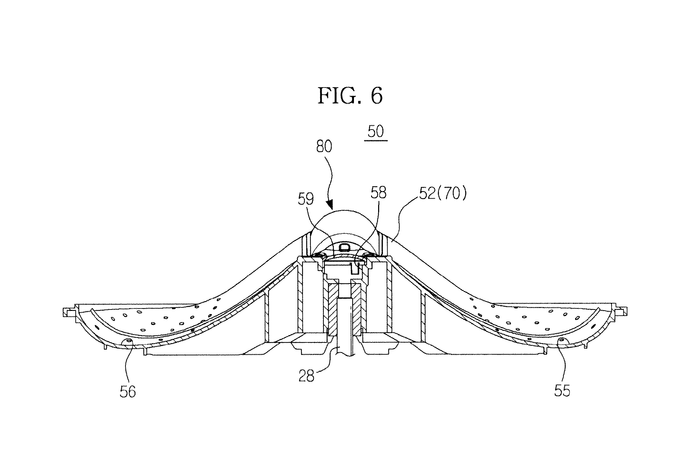

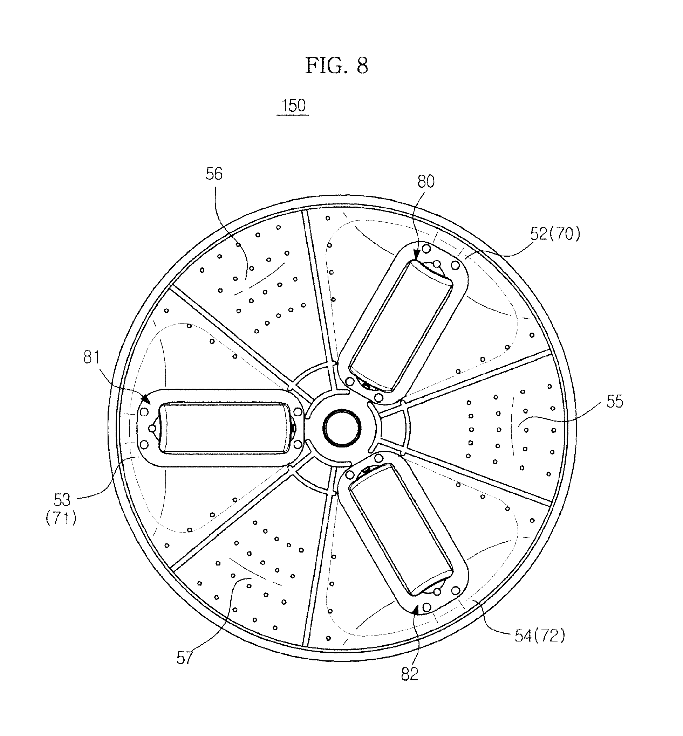

FIG. 2 is a perspective view of a pulsator according to an embodiment. FIG. 3 is a plan view of the pulsator of FIG. 2, and FIG. 4 is a bottom view of the pulsator of FIG. 2. FIG. 5 is a sectional view taken along line A-A of the pulsator of FIG. 2, and FIG. 6 is a sectional view taken along line B-B of the pulsator of FIG. 2. FIG. 8 is a plan view of a pulsator according to another embodiment.

As shown in FIGS. 2 and 3, a pulsator 50 may be formed approximately in the shape of a disc. At the center of the pulsator 50 may be formed a shaft coupling hole 58, in which the washing shaft coupling part 28 of the washing shaft 27 may be fitted. A cap 59 for separation prevention may be coupled to the washing shaft coupling part 28 of the washing shaft 27, fitted in the shaft coupling hole 58.

Also, a plurality of through holes 61, through which wash water flows, may be formed at the pulsator 50. As shown in FIGS. 2 and 4, a plurality of rib blades 62 may be radially disposed at the bottom of the pulsator 50 to move wash water below the pulsator 50.

Meanwhile, the top of the pulsator 50 may be curved to generate a water current and move laundry when the pulsator 50 is rotated about the shaft coupling hole 58.

As shown in FIG. 2, a first valley part 55, a first ridge part 52, a second valley part 56 and a second ridge part 53 may be sequentially formed at the top of the pulsator 50 in the circumferential direction. An inclined plane 60 formed approximately in the shape of a sine wave may be provided between the first valley part 55 or the second valley part 56 and the first ridge part 52 or the second ridge part 53.

In this structure, laundry moving to the first valley part 55 or the second valley part 56 of the pulsator 50 due to gravity moves upward along the inclined plane 60 as the pulsator 50 is rotated.

Consequently, the first ridge part 52 and the second ridge part 53 may function as a first lifter 70 and a second lifter 71 to raise the laundry during rotation of the pulsator 50.

As shown in FIG. 6, the section of the first lifter 70 and the first ridge part 52 may be formed approximately in the shape of a normal distribution curve so that the laundry is easily raised and lowered. Similarly, the section of the second lifter 71 and the second ridge part 53 may be formed approximately in the shape of a normal distribution curve.

In this embodiment, two ridge parts, i.e. two lifters, and two valley parts may be provided so as to be symmetrical with respect to the center of the pulsator 50. Alternatively, as shown in FIG. 8, three ridge parts, i.e. three lifters, and three valley parts may be provided at an angular interval of 120 degrees.

Referring to FIG. 8, a first valley part 55, a first ridge part 52, a second valley part 56, a second ridge part 53, a third valley part 57 and a third ridge part 54 may be sequentially formed at the top of a pulsator 150 according to another embodiment. Movement changing members 80, 81 and 82 may be formed at the upper ends of the respective ridge parts.

The valley parts and the ridge parts may be disposed at different angular intervals. Furthermore, four or more valley parts and four or more ridge parts may be provided. Also, three or more movement changing members may be formed at the pulsator 50.

Meanwhile, the movement changing members 80 and 81 to drop raised laundry to the first valley part 55 or the second valley part 56 to change movement of the laundry so that the laundry is washed in a wobbling fashion due to impact of dropping the laundry may be formed at the upper ends of the first lifter 70 and the second lifter 71 or the first ridge part 52 and the second ridge part 53.

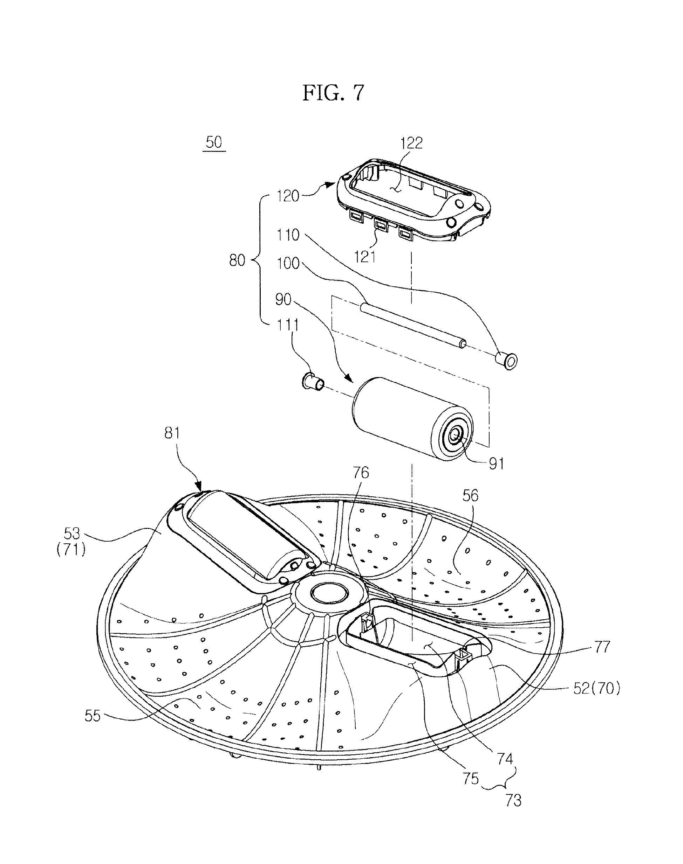

Hereinafter, a construction of the movement changing members 80 and 81 will be described with reference to FIG. 7.

FIG. 7 is an exploded view of the pulsator illustrating the construction of movement changing members according to an embodiment.

The movement changing members 80 and 81 may change the movement of laundry raised by the first lifter 70 and the second lifter 71 or the first ridge part 52 and the second ridge part 53 so that the laundry may drop to the first valley part 55 or the second valley part 56. The laundry may be washed due to impact of dropping the laundry, thereby possibly increasing washing force. Also, the laundry may rapidly move upward and downward, thereby possibly preventing the laundry from being entangled or twisted.

The movement changing members 80 and 81 may be provided at the upper ends of the first lifter 70 and the second lifter 71 or the first ridge part 52 and the second ridge part 53, respectively. Although not shown, a movement changing member may be provided at one of the first and second lifters 70 and 71 or one of the first and second ridge parts 52 and 53.

The construction of the movement changing member 81 provided at the upper end of the second lifter 71 or the second ridge part 53 may be identical to that of the movement changing member 80 provided at the upper end of the first lifter 70 or the first ridge part 52. Therefore, hereinafter, only the movement changing member 80 provided at the upper end of the first lifter 70 or the first ridge part 52 will be described.

The movement changing member 80 may include a roller 90 to be rotated by friction with laundry, a shaft 100 to support the roller 90 and bearings 110 and 111 to smooth rotation of the roller 90.

Also, the movement changing member 80 may further include a cover 120, which will be described below.

The movement changing member 80 may be located in a movement changing member receiving space depressed in the upper end of the first lifter 70 or the first ridge part 52 of the pulsator 50 to receive the movement changing member 80.

The movement changing member receiving space 73 may be divided into a first receiving space 74 to receive the roller 90, the bearings 110 and 111 and the shaft 100 and a second receiving space 75 to receive the cover 120.

The roller 90 may be formed approximately in the shape of a cylinder having a hollow part formed therein. Opposite ends of the roller 90 may be supported by the bearings 110 and 111 so that the roller 90 smoothly rotates with respect to the shaft 100.

The roller 90 may have a diameter of 50 mm to 100 mm, given which motion of the roller 90 is appropriately changed.

The shaft 100 may be fitted in the hollow part 91 of the roller 90 and the bearings 110 and 111 to support the roller 90. The shaft 100 may be fixedly coupled in shaft coupling grooves 76 and 77 provided at the first receiving space 74.

When the pulsator 50 is rotated, therefore, laundry raised by the first lifter 70 or the first ridge part 52 may rub against the roller 90 provided at the upper end of the first lifter 70 or the first ridge part 52. The rubbed roller 90 may be rotated about the shaft 100 to lower the laundry.

At this time, the pulsator 50 may be rotated in alternating directions, and therefore, the laundry may drop to the first valley part 55 or the second valley part 56.

Meanwhile, as shown in FIG. 5, the height of the movement changing members 80 and 81 may gradually increase from the shaft coupling hole 58 of the pulsator 50 to the outside of the pulsator 50 to prevent the laundry from being driven outside due to centrifugal force during rotation of the pulsator 50.

As a result, the laundry lowered by the movement changing members 80 and 81 may be guided toward the rotary shaft of the pulsator 50, thereby possibly preventing the laundry from being driven outside and thus entangled.

Referring back to FIG. 7, the movement changing member 80 may further include a cover 120 to prevent laundry from being caught in gaps defined between the first receiving space 74 formed at the upper end of the first lifter 70 or the first ridge part 52 of the pulsator 50 and the roller 90.

The cover 120 may cover all the gaps defined between the roller 90 and four edges of the first receiving space 74. At the top of the cover 120 may be formed an exposure space 122 through which the roller 90 is exposed.

As shown in FIGS. 4 and 7, coupling protrusions 121 may be formed at the cover 120. The coupling protrusions 121 of the cover 120 may be fitted in coupling grooves 78 formed at the rear of the pulsator 50 so that the cover 120 may be coupled to the pulsator 50.

Alternatively, the cover 120 may be integrally formed at the pulsator 50 by injection molding to further improve airtightness of the cover 120.

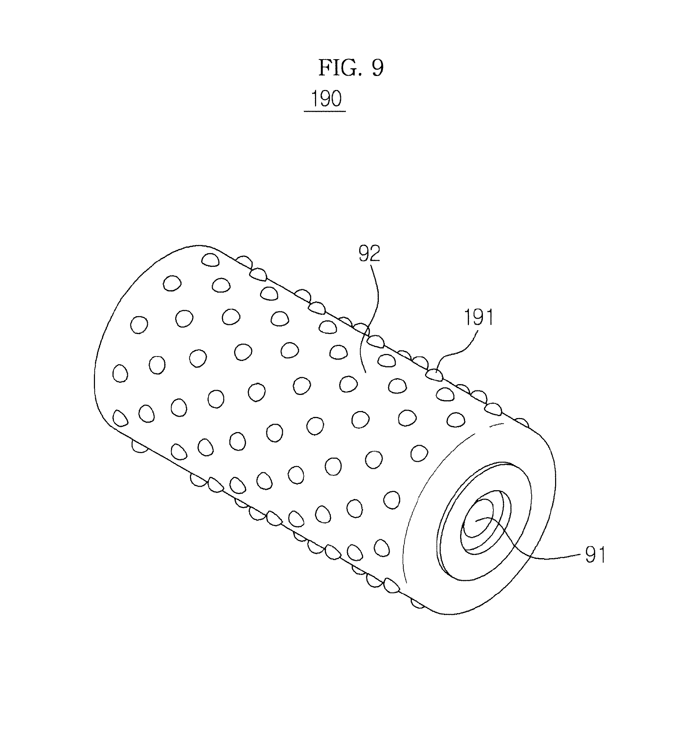

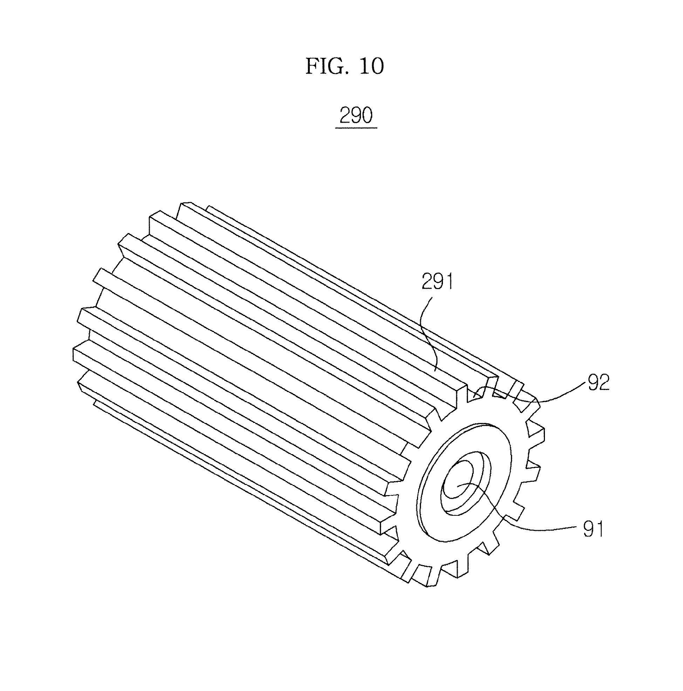

FIG. 9 is a view illustrating a roller according to another embodiment, and FIG. 10 is a view illustrating a roller according to a further embodiment.

The roller 90 of the movement changing member 80 may be provided at the outer circumference 92 thereof with an accelerating member to accelerate the laundry.

As shown in FIG. 9, a plurality of protrusions 191 may be formed at the outer circumference 92 of the roller 90. As shown in FIG. 10, sawteeth 291 may be formed at the outer circumference 92 of the roller 90.

As the pulsator 50 is rotated, laundry may be caught by the protrusions 191 or the sawteeth 291 formed at the outer circumference 92 of the roller 90. Contact force and frictional force between the roller 90 and the laundry may increase with the result that rotation of the roller and upward and downward movement of the laundry may be accelerated, thereby possibly improving washing force of the washing machine.

In this embodiment, the movement changing member 80 may include a cylindrical roller. Alternatively, the movement changing member 80 may include an oval roller or polygonal roller.

Hereinafter, operation of the washing machine will be described briefly with reference to FIGS. 1 to 7.

When laundry is introduced into the rotary tub 12 of the washing machine 1 and a washing cycle is initiated, the pulsator 50 provided at the lower part of the rotary tub 12 may be rotated. As the pulsator 50 is rotated, the laundry may be raised by the first lifter 70 or the second lifter 71 formed at the top of the pulsator 50. The raised laundry may be dropped by the movement changing member 80 provided at the upper end of the first lifter 70 or the movement changing member 81 provided at the upper end of the second lifter 71.

The laundry is may be effectively washed due to impact of dropping the laundry. Also, the laundry may be continuously moved upward and downward, thereby possibly preventing the laundry from being entangled or twisted.

As is apparent from the above description, the laundry raised by the lifters may be easily dropped by the movement changing members, and therefore, the laundry may be washed in a striking fashion due to impact of dropping the laundry.

Also, the movement of the laundry may be easily changed from upward to downward by the movement changing members, thereby possibly preventing the laundry from being entangled and damaged.

Also, the pulsator may include the movement changing member receiving spaces to receive the movement changing members and the covers to cover the gaps between the movement changing members and the movement changing member receiving spaces, thereby possibly preventing the laundry from being caught between the movement changing members and the movement changing member receiving spaces.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A washing machine comprising:
a cabinet;
a rotary tub rotatably disposed in the cabinet to contain laundry;
a pulsator rotatably mounted at a lower part of the rotary tub to move the laundry contained in the rotary tub, wherein the pulsator comprises:
valley parts and ridge parts alternately formed in a circumferential direction; inclined planes formed between the valley parts and the ridge parts; and
a roller mounted at an upper part of each of the ridge parts,
the roller extending from a center of the pulsator in a radial direction to rotate about a radial axis of the pulsator.

2. The washing machine according to claim 1, wherein the roller is formed in the shape of a cylinder having a hollow part.

3. The washing machine according to claim 2, wherein the pulsator further comprises a shaft disposed in the hollow part of the roller to support the roller.

4. The washing machine according to claim 1, wherein the pulsator further comprises a bearing coupled to the roller to smooth rotation of the roller.

5. The washing machine according to claim 1, wherein the pulsator further comprises a receiving space formed at the upper part of each of the ridge parts to receive the roller.

6. The washing machine according to claim 5, wherein the pulsator further comprises a cover to cover a gap defined between the receiving space and the roller to prevent the laundry from being caught in the gap defined between the receiving space and the roller.

7. The washing machine according to claim 6, wherein the cover is integrally formed at the pulsator.

8. The washing machine according to claim 1, wherein the roller is disposed so that a portion of the roller is placed inside each of the ridge parts and the remaining portion of the roller is exposed outside.

9. The washing machine according to claim 1, wherein the inclined planes are curved.

10. The washing machine according to claim 1, wherein the roller is inclined from the center of the pulsator in the radial direction to prevent the laundry from being driven outside due to centrifugal force.

11. The washing machine according to claim 1, wherein the roller is provided at an outer circumference thereof with an accelerating member.

12. The washing machine according to claim 11, wherein the accelerating member comprises a plurality of protrusions formed at the outer circumference of the roller.

13. The washing machine according to claim 11, wherein the accelerating member comprises sawteeth formed at the outer circumference of the roller.
